Europäisches Patentamt

European Patent Office

Office européen des brevets

(19)

(11) **EP 1 253 751 A2**

(12) **EUROPÄISCHE PATENTANMELDUNG**

(43) Veröffentlichungstag:
**30.10.2002 Patentblatt 2002/44**

(51) Int Cl.⁷: **H04L 12/56**

(21) Anmeldenummer: **01120057.3**

(22) Anmeldetag: **21.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **25.04.2001 EP 01110000**

(71) Anmelder: **Mathias, Paul, Dr.**
**52072 Aachen (DE)**

(72) Erfinder: **Mathias, Paul, Dr.**
**52072 Aachen (DE)**

(54) **Adaptives verteiltes Verfahren zur Berechnung systemoptimaler Routen in Kommunikationsnetzen**

(57)    Beschrieben wird ein *adaptives* und *verteiltes* Verfahren zur *systemoptimalen Routenwahl* in paket-vermittelnden Kommunikationsnetzen, das als Koope-ration zweier rekurrenter neuronaler Netze interpretiert werden kann. Das Problem der systemoptimalen Rou-tenwahl besteht darin, Datenpakete mit bekannter Quel-le-Ziel-Beziehung unter Zuweisung bestimmter Routen so durch das Netz zu ihren Ziel-Routern zu dirigieren, daß eine systemweite Kostenfunktion bzw. Zielfunktion minimiert wird und gewisse vorgegebene Rahmenbe-dingungen (max. Speicherplatz der Router-Rechner, Serviceraten, etc.) eingehalten werden. Das Verfahren ist *adaptiv,* da es kontinuierlich die Routen an die aktu-ellen Lastmuster des Netzes anpassen kann, und *ver-teilt,* da jeder Router-Rechner des Netzes lediglich lo-kale Operationen ausführt und dafür nur mit seinen nächsten, direkt verbundenen, Nachbarn kommunizie-ren muss.

**Figur 1**

**Beschreibung**

**Einleitende Bemerkungen**

An die Leistungsfähigkeit paketvermittelnder Rechnernetze werden heutzutage immer größere Anforderungen gestellt. Zum einen erfordert der stetig zunehmende Verkehr immer leistungsfähigere Routing-Verfahren, die die Last optimal auf das zur Verfügung stehende Kommunikationsnetz verteilen. Andererseits ist aufgrund der Heterogenität der zu erbringenden Dienste die Berücksichtigung anwendungsbezogener Dienstgüteparameter (quality of service) durch die Kommunikationssysteme unabdingbar. Um auf die verschiedenen Anforderungen der Anwendungen reagieren und geeignete Datenwege bzw. Routen bereitstellen zu können, werden effiziente Wegewahl- bwz. Routing-Algorithmen benötigt, die eine dynamische Anpassung der Routen an die aktuellen Lastmuster auf dem Netz leisten sollen. Solche Routing-Algorithmen sollten verschiedene Routing-Metriken oder Zielfunktionen zur anwendungsbezogenen Bewertung von Routen in ihr Kalkül mit einbeziehen.

Aus Performance-Gründen werden meist sog. *Kürzeste Wege Verfahren* implementiert, die für einzelne Quelle-Ziel-Beziehungen geeignete Routen durch das Netz berechnen, ohne aber die Routenwahl der jeweils anderen Quelle-Ziel-Beziehungen mit ins Kalkül zu nehmen. Dies führt in der Regel nicht zu einem *systemoptimalen* Zustand! Die beiden folgenden *Kürzeste Wege Verfahren* sind besonders bekannt und haben sich (so oder in abgewandelter Form) auf breiter Ebene durchgesetzt:

*Distance-Vector Routing* - Das Verfahren basiert auf dem Algorithmus von *Bellman-Ford.* Jeder Router versendet einen Teil seiner Routing-Tabelle (Zieladresse, Distanz) periodisch an seine Nachbarn. Mit Hilfe dieser Informationen berechnet jeder Router, welcher Nachbar momentan die günstigste Route zu einem Ziel anbietet und trägt ihn zusammen mit dem errechneten Distanzwert in seine Routing-Tabelle ein. Es erfolgt so eine verteilte Berechnung der Routen (kein Router braucht die vollständige Route zu kennen). Das Verfahren zeichnet sich insgesamt durch seine Einfachheit und einen niedrigen Speicheraufwand aus. Es besitzt aber auch gravierende Nachteile, zu denen etwa seine Trägheit (das sogenannte *Count-to-Infinity-Problem*), seine Neigung zur Ausbildung von Routing-Schleifen und Oszillationen, sein Unvermögen die Leitungsbandbreiten in die Wegewahl einzubeziehen und auch seine Langsamkeit gehören. Aufgrund dieser Nachteile ist das *Distance-Vector Routing* mehr und mehr vom *Link-State Routing* abgelöst worden.

*Link-State Routing* - Dieses Verfahren gilt als eine flexiblere und robustere Alternative zum oben beschriebenen *Distance-Vector Routing*. Dabei besitzt jeder einzelne Router-Rechner Informationen über die gesamte Topologie des Netzes. Es werden die Zustände des Systems, die *link states,* durch das gesamte Netz propagiert (*flooding*), so daß jeder Router, mit einer kleinen Verzögerung, den gesamten Netzzustand kennt. Diese Datenbasis nutzt jeder Router, um autonom mit Hilfe des *Dijkstra*-Algorithmus die kürzesten Routen für jede ihn betreffende Quelle-Ziel-Beziehung zu berechnen. Nachteile des Verfahrens *Link State Routing* sind vor allem die relativ hohe Netzbelastung, die durch das *Flooding* verursacht wird, und die hohen Speicher und Prozessoranforderungen. Außerdem können sich in bestimmten Situationen Routenschleifen ausbilden (besonders, wenn die Last des Netzes mit in das Wegewahlkalkül aufgenommen wird). Dies liegt daran, dass die Berechnungen unabhängig voneinander in den einzelnen Router-Rechnem durchgeführt werden.

Beide Algorithmen berechnen für jedes Quelle-Ziel-Paar genau einen Weg (*single path routing*).

Es ist daher die Aufgabe der vorliegenden Erfindung, ein Verfahren zur Berechnung von Routen in paketvermittelnden Kommunikationsnetzen zu beschreiben, welches in der Lage ist, systemoptimale Routen bzgl. Beliebig voegebbarer Zielfunktionen zu ermitteln. Die Aufgabe wird erfindungsgemäß gelöst durch ein Verfahren mit den Merkmalen des Anspruchs 1.

Die hier beschriebene Erfindung realisiert ein adaptives und verteiltes Verfahren zur systemoptimalen Routenwahl in paketvermittelnden Kommunikationsnetzen mit beliebig vorgebbarem Optimierungskriterium (Zielfunktion). Dazu werden das eigentliche Kommunikationsnetz und das zugehörige Routing-Verfahren auf spezielle, miteinander kooperierende neuronale Netze abgebildet, die *Identifikations*- und *Fehlerpropagierungsnetz* genannt werden.

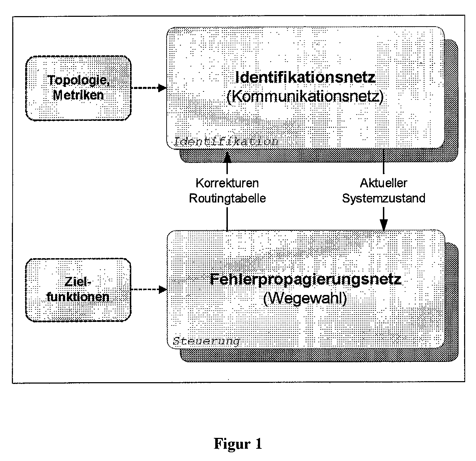

In Figur 1 ist dargestellt, dass die Aufgabe als Steuerungsproblem interpretiert werden kann, indem das eigentliche Kommunikationsnetz als das zu steuernde System (Identifikationsnetz) aufgefasst wird, und die optimale Wegewahl als Steuerung des ersten Subsystems. Strukturen und Zustände des Identifikationsnetzes werden durch die Topologie des Kommunikationsnetzes und dessen spezifische Attribute (Queuespeichergrößen, Service-Raten, etc.) definiert. Die freien einzustellenden Parameter des Identifikationsnetzes sind die Einträge der Routingtabellen der einzelnen Router-Rechner. Die Steuerung (das Fehlerpropagierungsnetz) stellt diese Parameter entsprechend einer gegebenen Zielfunktion ein. Beide Subsysteme kooperieren permanent miteinander: das Identifikationsnetz übermittelt zyklisch seinen aktuellen Systemzustand, während das Fehlerpropagierungsnetz zyklisch die jeweils neuen Korrekturen der Routingtabellen zurückgibt.

Die Bestimmung der optimalen Routen geschieht mit Hilfe des Fehlerpropagierungsnetzes, das als lineares rekurrentes neuronales Netz eine modifizierte Version des besonders effizienten Lernverfahrens *Rekurrentes Backpropagation* realisiert. Die Berechnungen des Fehlerpropagierungsnetzes sind durchweg *lokal*, d.h. dass jeder Router-Rechner nur einen geringen Teil der Gesamtberechnung durchführen muss. Das Modell ist fähig, beliebige Teilmengen des Datenverkehrs (z.B. den Verkehr eines Zieles) in sogenannten *Schichten* separat zu routen, wobei die Abhängigkeiten der Schichten untereinander berücksichtigt werden.

Das Verfahren ist sowohl für verbindungslose Vermittlerschichten (also Datengrammteilnetze wie TCP/IP), als auch für verbindungsorientierte Dienste (Teilnetze mit virtuellen Verbindungen wie ATM), oder auch für Mischformen der beiden geeignet. Es ist einfach, robust und stabil. Weitere Kriterien wie Fairness und Optimalität lassen sich über geeignet definierte Zielfunktionen einbringen.

### Lösung von Routing-Problemen mit Hilfe von Rekurrenten Neuronalen Netzen

Abbildung von Topolgie und Dynamik eines Routine-Netzes auf ein Rekurrentes Neuronales Netz

Ein Routing-Netz sei definiert durch einen gerichteten Graph $\mathcal{G} = (\mathcal{K}, \mathcal{S})$, mit $\mathcal{K}$ = Menge von $N$ Router-Rechnern und $\mathcal{S}$ = Menge von $M$ Router-Verbindungen, wobei "Router-Verbindung" hier für den Übertragungskanal zusammen mit dem entsprechenden Router-Ausgang und seinem Warteschlangenspeicher (output queue) steht! $Q$ bzw. $Z$ sei die Anzahl der Datenquellen bzw. Datenziele des Netzes. Weiter seien $\varrho \subset \mathcal{S}$ die Menge der Quellanbindungen und $\mathcal{Z} \subset \mathcal{S}$ die Menge der Zielanbindungen.

Zunächst wird ein erstes rekurrentes neuronales Netz (*RANN*) konstruiert, das Topologie und Dynamik des Verkehrsgeschehens im Kommunikationsnetz möglichst realistisch nachbildet. Dieses Netz soll, entsprechend der üblichen Terminologie von Steuerungsmodellen, *Identifikationsnetz* oder auch *Identifikations-RANN* heißen. Die Topologien von Kommunikationsnetz und neuronalem Netz werden aufeinander abgebildet, indem die Router-Verbindungen $\mathcal{S}$ des Kommunikationsnetzes mit den Neuronen des *RANN* identifiziert werden. Die durch das Kommunikationsnetz und seinen Router-Rechnern realisierten Verbindungen von Router-Ausgängen entsprechen so den Kopplungen der Neuronen. Das damit definierte Netzwerk ist ein *rekurrentes* neuronales Netz, da prinzipiell jedes Neuron mit jedem anderen verbunden sein kann. Die Neuronen sind in diesem Falle aber spärlich gekoppelt, da ein Router in der Regel nur mit einigen wenigen anderen Routern in Verbindung steht. Man beachte, daß es zwischen zwei Neuronen keine Verbindungen in beide Richtungen geben kann, da die Strecken des Graphen $G$ gerichtet sind.

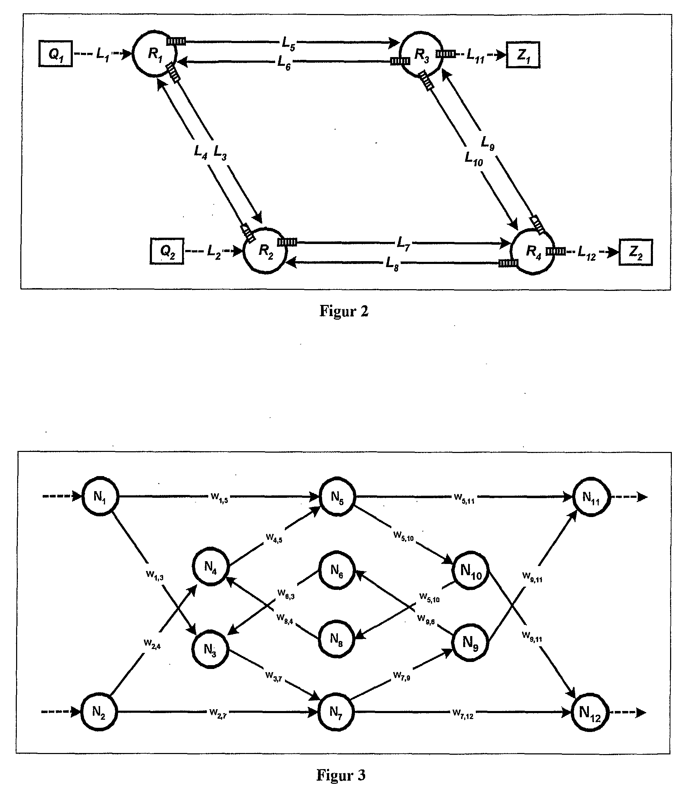

Die Figuren 2 und 3 veranschaulichen die beschriebenen Zuordnungen der Topologien anhand eines einfachen Beispiels. In Figur 2 ist ein einfaches Kommunikationsnetz dargestellt mit Router-Rechnern ($R_1$ bis $R_4$), Datenquellen ($Q_1$, $Q_2$), Datenzielen ($Z_1$, $Z_2$), und Verbindungsleitungen mit den zugehörigen Warteschlangenspeichern ($L_1$ bis $L_{12}$). Beispielsweise hat der Router $R_3$ die Möglichkeit, die über Leitung $L_5$ eintreffenden Datenpakete über die Leitungen $L_6$, $L_{10}$ oder $L_{11}$ weiterzurouten. Die Figur zeigt die Abbildung des Kommunikationsnetzes aus Figur 2 auf ein rekurrentes neuronales Netz. Die einzelnen Neuronen ($N_1$ bis $N_{12}$) entsprechen den Verbindungsleitungen mit den zugehörigen Warteschlangenspeichern des Kommunikationsnetzes. Die Einträge der Routingtabellen der Router-Rechner, die das Multipath-Routing des Kommunikationsnetzes definieren, sind die Kopplungsgewichte $w_{i,k}$ des neuronalen Netzes. Die Kopplungsgewichte müssen aufsummiert den Betrag 1 ergeben (Bsp.: $w_{1,3} + w_{1,5} = 1$).

Dem Aktivitätszustand $x_i(t)$ des $i$-ten Neurons zum Zeitpunkt $t$ entspricht, aufgrund der beschriebenen Identifikation von Router-Verbindungen und Neuronen, die Anzahl der Datenpakete, die sich zu diesem Zeitpunkt in der Warteschlange des Router-Ausganges $i \in \mathcal{S}$ befinden. Die Propagierung der Datenpakete im Kommunikationsnetz wird im neuronalen Netz mit Hilfe spezieller Aktivitätsfunktionen $s_i$, $r_i$ und Kopplungsgewichten $w_{ik}$, $i,k \in \mathcal{S}$, realisiert. Diese vom Zustand des Neurons (bzw. der Anzahl der Datenpakete) abhängigen Funktionen werden als *Service* ($s_i$) bzw. als *Speicherrestriktionen* ($r_i$) des Kommunikationssystems interpretiert. Sie bestimmen, wie sich die neuronalen Zustände pro Zeitschritt ändern, oder in der Sprache des Kommunikationssystems, wieviele Datenpakete in einem Zeitschritt einen Router-Ausgangsspeicher erreichen bzw. verlassen. Die Kopplungsgewichte $w_{ik}$ legen fest, wie die an den Router-Eingängen $i$ ankommenden Datenpakete auf die Router-Ausgänge $k$ verteilt werden. Sie definieren damit eine Routing-Tabelle. Zum Beispiel besagt ein Gewicht $w_{ik} = 0.5$, dass der Router, der den Router-Ausgang $k$ enthält, genau die Hälfte der an seinem Router-Eingang vom Router-Ausgang $i$ eines anderen Router-Rechners ankommenden Datenpakete zum Router-Ausgang $k$ leitet. Für die Gewichte des *RANN* wird aus Gründen der Datenerhaltung

$$0 \leq w_{ij} \leq 1, \quad \forall i, j \qquad \text{und} \qquad \sum_{j} w_{ij} = 1, \quad \forall i \qquad\qquad (0.1)$$

gefordert.

Das so konstruierte *Identifikations-RANN* ist jedoch als Teilmodell für ein Routing-Verfahren zu unspezifisch, da damit noch nicht die Quelle-Ziel-Beziehungen der Datenpakete berücksichtigt werden können. Diese Beziehungen seien formal duch zeitabhängige *Datenverkehrsmatrizen* $U(t) = u_{ik}(t)$, $\dim(U) = Q \cdot Z$, gegeben. Die Matrixeinträge $u_{ik}(t)$ geben an, wieviele Datenpakete pro Zeiteinheit von der Quelle $i \in \mathcal{O}$ zum Ziel $k \in \mathcal{Z}$ transportiert werden müssen.

Die Einbeziehung der Quelle-Ziel-Verkehrsnachfragen in das Modell geschieht über eine Erweiterung des *Identifikations-RANN.* Dazu wird das *Identifikations-RANN* aus $Z$ einzelnen *Schichten* aufgebaut, von denen jede einzelne eine Kopie der originalen Netztopologie ist. Jede Schicht soll dabei die Teilflüsse des Gesamtszenarios simulieren, die, von irgendeiner Datenquelle ausgehend, zu genau einem Ziel führen. Die Anzahl der Schichten eines so erweiterten *Identifikations-RANN* ist identisch mit der Anzahl $Z$ der Ziele des Kommunikationsnetzes. In jeder Schicht wird auf diese Weise eine bestimmte Teilmenge des Gesamtdatenverkehrs modelliert. Um Sackgassen zu vermeiden, werden noch in jeder Schicht $d$ alle Neuronen und Verbindungen entfernt, die nicht auf irgendeiner zum Ziel $d$ führenden Route liegen (von wo aus das betreffende Ziel nicht erreicht werden kann).

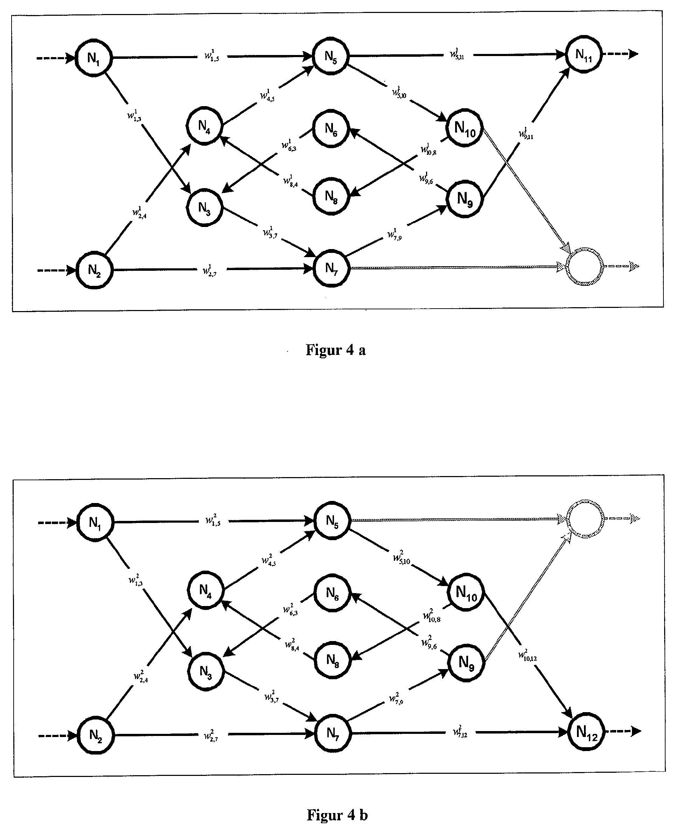

In Figur 4 (a und b) wird veranschaulicht, wie für die Subdatenströme eines jeden Ziels eine identische Kopie des orginalen neuronalen Netzes konstruiert wird. Diese Kopien werden Schichten genannt. Mit der Einführung der Schichten werden auch alle Zustandgrößen des orginalen Netzes vervielfacht. Die neuen Größen werden durch einen Topindex unterschieden (Bsp.: $w_{3,7}^2$ ist ein Kopplungsgewicht der Schicht 2). Die Abbildung zeigt die beiden Schichten für das Beispiel aus den Figuren 2 und 3. In der Schicht $i$ werden danach genau die Datenströme des Gesamtsystems modelliert, die das Ziel $i$ haben. Es ist aber zu beachten, dass die Schichten nicht vollkommen unabhängig voneinder sind, da in die dynamischen Gleichungen (0.2) des neuronalen Netzes auch Summen von schichtspezifischen Zustandgrößen über *alle* Schichten eingehen. In jeder Schicht werden die Sackgassen zu den jeweils anderen Zielen entfernt (d.h. die Kopplungsgewichte dieser Verbindungen werden konstant auf den Wert 0 gesetzt).

Die Quelldatenflüsse $q_k^d$ einer jeden Schicht $d$ lassen sich leicht entweder aus der vorgegebenen Datenverkehrsmatrix berechnen ($q_k^d = u_{kd}$), oder direkt aus den Statistiken des betreffenden Quell-Routers ablesen.

Für das erweiterte *Identifikations-RANN* gilt:

1. Jede Schicht $d$ enthält einen eigenen Satz von Aktivitätszuständen $x_i^d(t)$ mit

$$x_i := \sum_{d=1}^{Z} x_i^d \,,$$

eigene Aktivitätsfunktionen $s_i^d$ mit

$$s_i := \sum_{d=1}^{Z} s_i^d$$

und eigene Kopplungsgewichte $w_{ik}^d$. Damit ist beispielsweise $x_i^d(t)$ die Anzahl der Datenpakete im Warteschlangenspeicher des Router-Ausgangs $i$ mit dem Ziel $d$. Für das Weitere seien noch $x_i := (x_i^1, x_i^2, ..., x_i^Z)^T$ der Vektor der Datenmengen aller Schichten, $x^d := (x_1^d, x_2^d, ..., x_M^d)^T$ der Vektor der Datenmengen der Schicht $d$, und $x := (x^1, x^2, ..., x^Z)^T$ der Vektor aller Datenmengen.

2. Die Datenflüsse der einzelnen Schichten sind nicht unabhängig voneinander. Wie später gezeigt wird, hängen sowohl der *Service* $s_i^d$ als auch die *Speicherrestriktion* $r_i$ von den Aktivitätszuständen $x_i$ aller Schichten ab.

Die zeitdiskreten dynamischen Gleichungen der einzelnen Schichten des *Identifikations-RANN* sind gegeben durch

$$\begin{aligned} x_k^d(t + \tau_x) &= x_k^d(t) + u_k^d(t) - h_k^d(t) + \tau_x q_k^d(t) \\ &= x_k^d(t) + r_k(t) \sum_i w_{ik}^d(t) s_i^d(t) - s_k^d(t) \sum_i w_{ki}^d(t) r_i(t) + \tau_x q_k^d(t). \end{aligned} \qquad (0.2)$$

Das durch die Gleichungen (0.2) definierte RANN ist ein sogenanntes $\Sigma$-$\Pi$-Netz, da es gewichtete Summen von Produkten von (sigmoiden) Funktionen enthält.

Hier und im nachfolgenden bezeichnet der Top-Index $d$ immer die Nummer der Schicht. Die $q_k^d$ sind die Quelldatenflüsse der Schicht $d$, und $\tau_x$ ist das diskrete Zeitintervall der Entwicklung.

Der *Service* $s_i^d$ der Schicht $d$ ist der Teil des *totalen Service* $s_i$, der dem Verhältnis der Datenmenge $x_i^d$ der

Schicht $d$ zur Gesamtdatenmenge $x_i$ entspricht:

$$s_i^d(\mathrm{x}_i) := s_i(x_i)\frac{x_i^d}{x_i}, \qquad \text{mit } s_i^d(\mathrm{x}_i) := 0, \text{ falls } x_i = 0 \qquad (0.3)$$

Der *totale Service* $s_i(x_i) \in [0;c_i]$ beschreibt die gesamte Sendeleistung des Router-Rechners über die Verbindung $i$ in Abhängigkeit der Datenmenge $x_i$ des zugehörigen Ausgangsspeichers, wobei $c_i$ die maximale *Servicerate* für den Ausgangsspeicher $i$ ist.

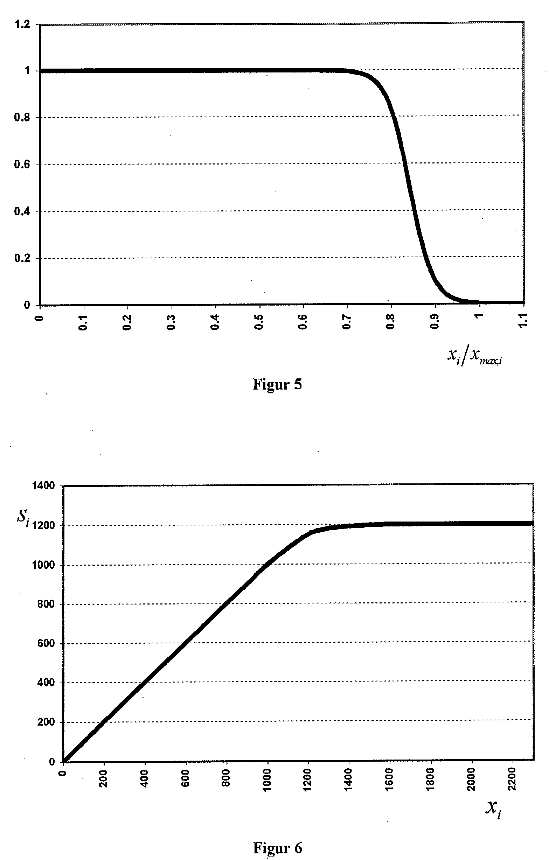

Die Form einer solchen Funktion zeigt die Figur 6. Hier ist die grobe Funktionsgestalt der *totalen Services* $s_i(x_i)$ aufgetragen über der Paketzahl $x_i$ des Warteschlangenspeichers. Die Sendeleistung $s_i$ ist nach oben beschränkt durch die Servicerate $c_i$.

Die genaue Definition von $s_i$ wird im konkreten Anwendungsfall durch eine Reihe weiterer (fixer) Parameter bestimmt, wie z.B. die Leistungsfähigkeit der Rechner-Hardware und die Kanalkapazität der Leitung. Das hier beschriebene Verfahren kann beliebige *Service*-Funktionen $s_i$ verwenden, solange sie monoton steigend und stetig differenzierbar sind. Ein Beispiel für $s_i$ ist $s_i(x_i) := 2\tau_x c_i(1+ \exp(-a_i x_i))^{-1}-1$ mit freiem Parameter $a_i$.

Die monoton fallenden $r_k \in [0;1]$ sind die *Speicherrestriktionen.* Sie drücken das Unvermögen eines vollgelaufenen Ausgangsspeichers aus, noch weitere Datenpakete aufzunehmen. Die $r_k$ hängen von der totalen Datenmenge der Ausgangsspeicher $k$ ab, d.h. $r_k(t) = r_k(x_k(t))$. Anforderungen an die $r_k$ sind: monoton fallend, differenzierbar und einen Wertebereich zwischen 0 und 1. Ein Beispiel für $r_k$ ist $r_i(x_i) := 1-(1+\exp(a_i-b_i(x_i/x_{max,i})))^{-1}$ mit freien Parametern $a_i,b_i$ und einer Datenspeichergröße $x_{max,i}$. Die genauen Definitionen der $r_k$ sind für das Verfahren unwesentlich, solange sie die obigen Anforderungen erfüllen.

Die Form einer solchen Funktion zeigt die Figur 5, wobei die *Speicherrestriktionen* $r_i(x_i)$ über dem Füllgrad $x_i/x_{max,i}$ des Speichers aufgetragen sind. Bis zu einem bestimmten Füllstand ($x_i/x_{max,i} \leq \alpha < 1$)können alle ankommenden Pakete aufgenommen werden, danach müssen zunehmend viele Pakete verworfen werden, bis schließlich bei vollem Speicher ($x_i/x_{max,i} = 1$) keine Pakete mehr aufgenommen werden können.

Die Definition der dynamischen Gleichungen (0.2) zeigt, dass die real zu- und abfliessenden Datenströme $u_k^d(t)$ und $h_k^d(t)$ sowohl von den Serviceraten als auch den Speicherrestriktionen der beteiligten Router-Rechner abhängen. Im Fall des abfliessenden Datenstroms $h_k^d(t)$ entspricht dies nicht ganz den realen Verhältnissen, da Pakete, die nicht von den nachfolgenden Routern und deren Ausgangsspeichern aufgenommen werden können, verloren gehen und erneut verschickt werden müssen, wohingegen dieses Simulationsmodell davon ausgeht, dass Datenpakete, die von den nachfolgenden Router-Rechnern nicht aufgenommen werden können, gar nicht erst verschickt werden. Entscheidend in diesem Zusammenhang ist aber, dass das später dazu passende Fehlerpropagierungsnetz rückstaufreie Routen berechnet, die automatisch die Verlustrate und das Wiederversenden von Datenpakten minimieren.

Mit Einführung der Korrelationsterme $a_{ik}^d(t) = s_i^d(t)\cdot r_k(t)$ lässt sich (0.2) auch wie folgt schreiben:

$$x_k^d(t+\tau_x) = x_k^d(t)+\sum_i w_{ik}^d(t)a_{ik}^d(t)-\sum_i w_{ki}^d(t)a_{ki}^d(t)+\tau_x q_k^d(t). \qquad (0.4)$$

Die $a_{ik}^d$ werden später für weitere Berechnungen verwendet werden.

Die Konstruktion eines kooperierenden Fehlerpropagierungsnetzes

Das *Fehlerpropagierungsnetz* ist der Routing-Modellteil des Verfahrens. In ihm werden Fehlersignale in entgegengesetzter Richtung zu den Datenpaketen des *Identifikationsnetzes* propagiert. Die Zustände dieses linearen rekurrenten neuronalen Netzes werden benutzt, um Korrekturen $\Delta w_{ik}^d$ der Gewichte $w_{ik}^d$ des Identifikationsnetzes entsprechend vorgegebener Optimierungskriterien zu berechnen (die $w_{ik}^d$ legen die Routen der Datenpakete durch das Kommunikationsnetz fest).

Das *Fehlerpropagierungsnetz* realisiert über einen Gradientenabstieg entlang einer vorgegebenen Zielfunktion eine modifizierte Version des Lernverfahrens *rekurrentes Backpropagation*. Die Entwicklung der benötigten Formeln wird hier verkürzt - ohne Zwischenschritte - wiedergegeben, da die vollständigen Ausführungen den Rahmen dieser Erfindungsbeschreibung sprengen würde. Die Ausführungen folgen aber prinzipiell der bekannten Herleitung des *rekurrenten Backpropagation* Lernverfahrens, so wie es z.B. in [4] erklärt ist. Der Unterschied besteht vor allem darin, das es sich bei dem *Identifikations-Netz* um ein sogenanntes $\Sigma$-$\Pi$-Netz handelt.

Die Zielfunktionen können, je nach Einsatzfall und gewünschtem Optimierungsziel, fast beliebig definiert werden (sie müssen differenzierbar in $x_i$ sein). Sinnvolle Zielfunktionen für optimale Routing-Verfahren in Kommunikationsnetzen sind beispielsweise:

$$E(t) = \sum_i \pi_i\big(s_i(x_i(t))\big)\, s_i(x_i(t)) = \sum_i \frac{s_i^2(x_i(t))}{c_i - s_i(x_i(t))}\,, \tag{0.5}$$

mit einer M/M/1-Wartezeitfunktion $\pi_i(s) = s/(c_i - s)$, oder einfach:

$$E(t) = \sum_i \varphi_i\, x_i(t)\,, \tag{0.6}$$

mit den positiven Gewichtungskonstanten $\varphi_i$, oder eine Funktion, die für alle alternativen Routen eines Quelle-Ziel-Paares gleiche Transportzeiten erzwingt:

$$E(t) = \sum_i \int_0^{s_i(t)} \pi_i(y)\, dy\,, \tag{0.7}$$

mit einer beliebiger Verzögerungszeitfunktion $\pi_i(s)$.

Für die Korrektur der Gewichte ergibt sich nach dem Gradientenabstiegsverfahren

$$\Delta w_{pq}^d = -\varepsilon \sum_{k=1}^M \sum_{e=1}^Z \frac{dE_k}{dx_k}\frac{\partial x_k^e}{\partial w_{pq}^d} =: -\varepsilon \sum_{k=1}^M \sum_{e=1}^Z L_k \frac{\partial x_k^e}{\partial w_{pq}^d}\,, \tag{0.8}$$

mit einer Schrittweite $\varepsilon$ des Abstiegs und den von der verwendeten Zielfunktion abgeleiteten Konstanten $L_k = dE_k / dx_k$. Für die Zielfunktion (0.5) ergibt sich beispielsweise :

$$L_k = s_k s_k' \frac{2c_k - s_k}{(c_k - s_k)^2}. \tag{0.9}$$

Die unbekannten partiellen Ableitungen $\partial x_k^e/\partial w_{pq}^d$ werden über die dynamische Gleichung (0.4) bestimmt; es ergibt sich

$$\frac{\partial x_k^e}{\partial w_{pq}^d} = \frac{\partial x_k^e}{\partial w_{pq}^d} + \delta_{kq}\,\delta_{ed}\,a_{qp}^d + \sum_i w_{ik}^e \frac{\partial a_{ik}^e}{\partial w_{pq}^d} - \delta_{kp}\,\delta_{ed}\,a_{qp}^d - \sum_i w_{ki}^e \frac{\partial a_{ki}^e}{\partial w_{pq}^d} \tag{0.10}$$

mit

$$\frac{\partial a_{ik}^e}{\partial w_{pq}^d} = \left(\frac{s_i'}{s_i} - \frac{1}{|x_i|}\right) s_i^e\, r_k \sum_j \frac{\partial x_i^j}{\partial w_{pq}^d} + \frac{s_i}{|x_i|}\, r_k \frac{\partial x_i^e}{\partial w_{pq}^d} + s_i^e\, r_k' \sum_j \frac{\partial x_k^j}{\partial w_{pq}^d}$$

$$=: F_{ik}^e \sum_j \frac{\partial x_i^j}{\partial w_{pq}^d} + G_{ik} \frac{\partial x_i^e}{\partial w_{pq}^d} + H_{ik}^e \sum_j \frac{\partial x_k^j}{\partial w_{pq}^d} \tag{0.11}$$

$$\left(\lim_{x_i \to 0} F_{ik}^e(x_i) = 0\right)$$

und

$$\lim_{x_i \to 0} G_{ik}(x_i) = 1 / \pi(0) > 0 ).$$

Durch Umstellungen und Substitutionen von (0.10) ergibt sich ein neues lineares RANN (das *Fehlerpropagierungsnetz*) mit der dynamischen Gleichung

$$y_k^e(t + \tau_y) = \sum_i \sum_l v_{ik}^{le} y_i^l(t) - \frac{L_k}{G_k} \qquad (0.12)$$

und Kopplungsgewichten

$$v_{ik}^{le} := \frac{1}{K_k^e}\left[\left(w_{ki}^l F_{ki}^l - w_{ik}^l H_{ik}^l\right) - \delta_{ik}\sum_j\left(w_{kj}^l F_{kj}^l - w_{jk}^l H_{jk}^l\right) + \delta_{el} w_{ki}^e G_{ki}\right]. \qquad (0.13)$$

Das in (0.12) definierte lineare System ist jedoch nicht kontrahierend, da die Matrix $v_{ik}^{le}$ einen Spektralradius größer 1 besitzt. Eine Umstellung der Gleichungen in die Form

$$\sum_i v_{ik}^{ee} y_i^e = \frac{L_k}{G_k} - \sum_i \sum_{l \neq e} v_{ik}^{le} y_i^l \qquad (0.14)$$

gestattet aber eine Interpretation des Systems als zwei miteinander kooperierende *Fehlerpropagierungsnetze*. Die linke Seite der Gleichung definiert das 1. *Fehlerpropagierungsnetz* mit einer Gewichte-Matrix $v_{ik}^{ee}$. Seine Aufgabe ist es, das lineare Gleichungssystem (0.14) bei festgehaltener rechter Seite iterativ zu lösen. Das 2. *Fehlerpropagierungsnetz* mit der Gewichte-Matrix $v_{ik}^{le}$ dagegen löst das Gleichungssystem (0.14) bei festgehaltener linker Seite. Die dynamische Gleichung des 1. linearen Netzes ist also

$$y_k^e(t + \tau_y) = \sum_i^M v_{ik}^{ee} y_i^e(t) - \left(\frac{L_k}{G_k} - z_k^e(t)\right), \qquad (0.15)$$

während das 2. Netz die folgende lineare Operation realisiert

$$z_k^e(t + \tau_y) = \sum_i^M \sum_{l \neq e}^Z v_{ik}^{le}\left[\sum_j^M v_{ji}^{ll} y_j^l(t) - \frac{L_i}{G_i}\right] + \sum_i^M \sum_{l \neq e}^Z v_{ik}^{le} z_i^l(t). \qquad (0.16)$$

Die beiden linearen Netzwerke arbeiten wechselweise solange, bis sich ein stabiler Zustand einstellt (die Lösung $y^*$ des durch (0.12) definierten Gleichungssystems). Mit Hilfe der Lösung $y^*$ können die benötigten Korrekturen der Gewichte wie folgt bestimmt werden:

$$\Delta w_{pq}^d = \varepsilon(y_q^{*d} - y_p^{*d}) a_{pq}^d. \qquad (0.17)$$

Arbeitsweise des Gesamtmodells

Die Arbeitsweise des Gesamtmodells besteht darin, das *Identifikationsnetz* und die beiden *Fehlerpropagierungsnetze* wechselweise oder parallel entsprechend ihrer dynamischen Gleichungen zu entwickeln, und nach einer einstellbaren Anzahl Zeittakte $t_{Ident}$ bzw. $t_{Error}$ die aktuellen Netzzustände dem jeweils anderen RANN zur Berechnung seiner Gewichtskorrekturen zu übergeben. Die ganzzahligen Zeittaktparameter $t_{Ident}$ und $t_{Error}$ bestimmen, wie oft Korrekturen an den Gewichten erfolgen und wie genau diese Korrekturen sind, Sie können als eine Art Trägheit des Systems interpretiert werden (größere Werte entsprechen einer größeren Trägheit).

Die folgenden Schritte werden zyklisch entweder hintereinander oder parallel ausgeführt:

1. *Identifikationsnetz*: Entwickle den Systemzustand über $t_{Ident}$ diskrete Zeitschritte der Länge $\tau_x$ nach den dynamischen Gleichungen (0.2),

2. *Fehlerpropagierungsnetz*: Übernehme den aktuellen Zustand $x_i^d(t)$ des *Identifikationsnetzes* und berechne die Gewichte $v_{ik}^{le}$ nach (0.13),

3. *Fehlerpropagierungsnetz*: Entwickle den Systemzustand über $t_{Error}$ diskrete Zeitschritte der Länge $\tau_y$ nach den dynamischen Gleichungen (0.15) und (0.16),

4. *Identifikationsnetz*: Übernehme den aktuellen Zustand $y(t)$ des *Fehlerpropagierungsnetzes* und Aktualisiere die Gewichte $w_{ik}^d$ unter Verwendung von (0.17).

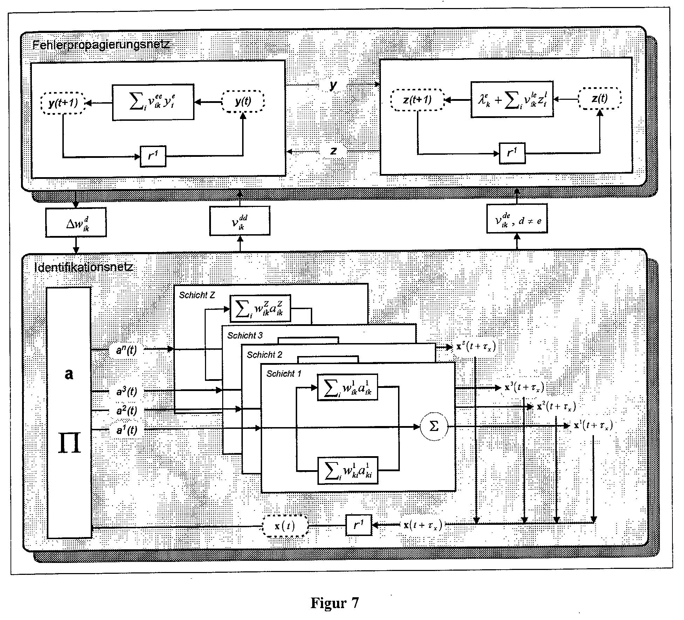

Eine Übersicht über das Gesamtmodell zeigt die Figur 7. Man erkennt, dass das Gesamtmodell im Wesentlichen zweigeteilt ist: das geschichtete *Identifikationsnetz* mit den Funktionen $s_i$ (*totale Services)* und $r_i$ (*Speicherrestriktionen*), die beide von Summen von Zustandswerten der einzelnen Schichten abhängen, und dem zweigeteilten *Fehlerpropagierungsnetz*, das die systemoptimale Wegewahl realisiert. Die Fehlerpropagierungssubnetze erhalten zyklisch aus Zustandsvariablen des Identifikationsnetzes berechnete Gewichte $v_{ik}^{dd}$ bzw. $v_{ik}^{de}$, und geben Gewichtskorrekturen für die Kopplungsgewichte des Identifikationsnetzes zurück. Durch ein permanentes Wechselspiel der Subsysteme nach vorgebbaren Zyklen werden die Routingtabellen des Kommunikationsnetzes dynamisch an die wechselnden Bedingungen (Netzbelastung und Verkehrsnachfrage) angepasst.

## Übertragung des RANN-Routing-Modells in den Kontext paketvermittelnder Kommunikationsnetze

### Implementation des RANN-Routing-Modells in einzelnen Router-Rechnern

Entscheidend für die Implementation des RANN-Routing-Modells als Verfahren in einzelnen Router-Rechnern sind zwei Feststellungen:

1. Sowohl das geschichtete *Identifikations-* als auch das *Fehlerpropagierungsnetz* können direkt auf das Kommunikationsnetz abgebildet werden, da alle die gleiche Topologie besitzen. Dazu werden den einzelnen Router-Rechnern gerade die Neuronen bzw. Schichtneuronen zugeordnet, die ihren Ausgangsspeichern entsprechen. Die Services $s_i^d$ und Speicherrestriktionen $r_i$ des Identifikationsnetzes, die für die Berechnungen des Fehlerpropagierungsnetzes gebraucht werden, können entweder so definiert werden, dass sie den Leistungscharakteristiken von Router-Rechnern und Verbindungsleitungen entsprechen, oder die benötigten Funtionswerte und deren Ableitungen werden einfach von den Router-Rechnern als Statistiken geführt und bei Bedarf verwendet.

2. Alle vorkommenden Rechenoperationen des Fehlerpropagierungsnetzes sind *lokaler* Natur, d.h. sie können auf die einzelnen Router-Rechner so verteilt werden, dass jeder Router-Rechner nur einen geringen Teil der Gesamtberechnung ausführen muss, und dafür nur eigene Zustandsdaten und die der direkt verbundenen Nachbar-Router-Rechner benötigt. Es entsteht so ein vollständig verteiltes Verfahren.

Der konkrete Ablauf des Verfahrens in einem paketvermittelnden Kommunikationsnetz zerfällt in vier Funktionsblöcke, die parallel arbeiten, und von denen jeder Block seinen eigenen festen Ausführungszyklus besitzt:

*1. Datenpakete routen und Statistiken erstellen*

Jeder Router-Rechner routet die ankommenden Datenpakete entsprechend seiner Routing-Tabelle, die aus den Gewichten $w_{ik}^d$ gebildet wird. Dabei sind die Gewichte mit dem Index $d$ für die Pakete mit dem Ziel-Router $d$ (oder für einen entsprechend definierten Teilstrom $d$) zuständig. Das durch die $w_{ik}^d$ definierte Multipath-Routing (in der Regel existieren für festes $i$ Indizes $j_1, j_2$ mit $w_{i,J_1}^d, w_{i,J_2}^d, > 0$) wird realisiert, indem die Datenpakete in einem entsprechenden Verhältnis auf die Ausgänge $j_1$ und $j_2$ aufgeteilt werden. Diese Aufteilung soll weitgehend so erfolgen, dass die Datenpakete einer Quell-IP-Adresse genau einem Ausgang zugeordnet werden. Weiter führt jeder Router $k$ Statistiken (zeitliche Mittelwerte) über alle seine Teildatenströme $s_k^d, s_k$, deren zeitliche Veränderungen $S_k'$ und die Längen seiner Ausgangs-Warteschlangen $x_k^d, x_k$.

*2. Statusvariable propagieren und $\nu$-Gewichte berechnen*

Die statistischen Werte des Routers werden nach definierten Zeitintervallen $\tau_{Status}$ zyklisch an alle direkt verbundenen Nachbar-Router-Rechner geschickt. Nach Erhalt dieser Daten ist jeder Router in der Lage, entsprechend der Formel (0.13), seine Fehlerpropagierungs-Gewichte $\nu^{de}_{ik}, \nu^{de}_{ki}$ zu berechnen.

*3. Fehlersignale berechnen und propagieren*

Nach fest vorgegebenen Zyklen $\tau_{Err1}$ und $\tau_{Err2}$ berechnet jeder Router seine Fehlersignale $y^d_k$ und $z^d_k$ nach dem dynamischen Gesetzen (0.15) und (0.16). Die neuen Fehlersignale werden an alle direkt verbundenen Nachbar-Router-Rechner geschickt.

*4. Gewichtskorrekturen berechnen und propagieren*

Nach einem festen vorgegebenen Zeittakt $\tau_{Kor}$ berechnet jeder Router $k$ die Korrekturen $\Delta w^d_{ki}, \Delta w^d_{ik}$ seiner Routing-Gewichte $w^d_{ki}, w^d_{ik}$ mit Hilfe der aktuellen Werte $y^d_k$ nach der Formel (0.17), und normalisiert die neuen Gewichte. Die neuen Gewichte werden an alle direkt verbundenen Nachbar-Router-Rechner geschickt.

## Vorteile und besondere Leistungsmerkmale des Verfahrens

1. Das Modell ist ein *systemoptimales Routing-Verfahren*, optimal bezüglich beliebig vorgebbarer Zielfunktionen. Systemoptimal heisst auch, dass das Verfahren die einzelnen Routen nicht unabhängig voneinander berechnet; im Gegensatz etwa zum *Link-State-Routing*, wo jeder Router-Rechner unabhängig von den Berechnungen der a jeweils anderen Router-Rechner seine kürzesten Wege berechnet (was Oszillationen verursachen kann). Die Routen werden grundsätzlich lastabhängig berechnet, wobei die Routenmuster sich permanent an die aktuelle Verkehrsnachfrage und die Zustände der Ausgangsspeicher anpassen.

2. Das Berechnungsverfahren zur dynamischen Bestimmung der optimalen Routen ist besonders effizient, da der Backpropagation-Algorithmus derzeit die schnellste Möglichkeit darstellt, um Gradienten für ein Gradientenabstiegsverfahren zu berechnen.

3. Das Modell ist ein verteiltes Verfahren, bei dem jeder einzelne Router des Netzes nur einen geringen Teil der Gesamtberechnung ausführt. Die Arbeitsschritte des Fehlerpropagierungsnetzes zerfallen in elementare Operationen, die alle nur lokale Informationen - die eigenen und die der nächsten Nachbarn - benötigen. Die lokalen Operationen sind einfach und stellen keine besonderen Anforderungen an die einzelnen Routern bezüglich Rechenzeit und Speicherbedarf (im Gegensatz zum *Link-State-Routing*). Der zusätzliche Kommunikationsaufwand für die Fehlersignale ist gering. Die einzelnen Router-Rechner brauchen nicht die gesamte Topologie des Kommunikationsnetzes zu kennen.

4. Obwohl die zugrundeliegende Theorie mit den rekurrenten neuronalen Netzen von der Mathematik her relativ kompliziert erscheint, sind in der konkreten Implementation die lokalen Rechenoperationen für die einzelnen Router-Rechner besonders einfach.

5. Das Modell realisiert ein *multipath routing* ($w^d_{ik} \in [0;1]$, $\Sigma_k w^d_{ik} = 1$). Es routet die Informationspakete einer Quelle-Ziel-Beziehung bei starker Netzbelastung auch über verschiedene, alternative Routen, wodurch die zur Verfügung stehenden Netzkapazitäten maximal genutzt werden können. Eine Aufteilung der Datenpakete auf die verschiedenen Routen kann z.B. quellspezifisch erfolgen. Ein *multipath routing* kann weder durch das *Distance-Vector-Routing*, noch durch das *Link-State-Routing* realisiert werden.

6. Das Modell ist robust bezüglich Ausfällen von Routern. Ein ausgefallener Router-Rechner kann sich nicht mehr an der Verarbeitung der Fehlersignale beteiligen. Daraus resultiert, dass die ihn betreffenden Abbiegeraten der Nachbarrechner sofort (oder sehr schnell) zurückgesetzt werden. Dies ist gleichbedeutend mit einer automatischen Reduzierung der Topologie um diesen ausgefallenen Router. Der entgegengesetzte Vorgang ist ebenso möglich: ein Router-Rechner wird neu ins Netz eingebunden, nimmt Verbindung mit seinen Nachbarn auf und wird damit automatisch in die globale Routing-Strategie aufgenommen, ohne dass der neue Rechner allen Rechnern des Kommunikationsnetzes bekanntgegeben werden müsste.

7. Das Modell ist in der Lage, heterogener Dienste (Priorisierung, Garantierung eines quality-ofservice, multicast-routing oder gemischtes single- und multipath-routing) bereitzustellen, da einerseits in den Schichten des Identifikationsnetzes beliebige Teile des Gesamtverkehrs modelliert und optimiert werden können, und andererseits jede einzelne Schicht mit unterschiedlichen Dynamikparametern und Zielfunktionen versehen werden kann. Die Unterstützung solch spezifischer Dienste ist mit den gängigen Verfahren (*Distance-Vector-Routing*, *Link-State-Routing*) nicht zu erreichen.

**Zitierte Veröffentlichungen**

[1] P. Mathias, *Statische und dynamische Verkehrsumlegung mit Rekurrenten Neuronalen Netzen,* Shaker Verlag, ISBN 3-8265-6720-X, 1999.

[2] M. A. Sportack, *IP Routing Fundamentals*, Cisco Press, ISBN 1-57870-071-X, 1999.

[3] A. S. Tanenbaum, *Computernetzwerke,* Kapitel 5, Prentice Hall, 3. Auflage, ISBN 3-8272-9568-8, 1998.

[4] J. Hertz, A. Krogh, R. G. Palmer, *Introduction to the Theory of Neural Computation,* Chapter 7, Addison Wesley, ISBN 0-201-51560-1, 1991.

**Patentansprüche**

1. Verfahren zur Berechnung von, bezüglich vorgegebener netzweiter Zielfunktionen, optimaler Routen für die von einer Quelle zu einem Ziel zu transportierenden Dateneinheiten in Kommunikationsnetzen, mittels einer datenverarbeitenden Anlage,
   **gekennzeichnet durch** folgende Schritte:

   - Topologie und Dynamik des Kommunikationsnetzes werden auf ein spezielles rekurrentes neuronales Sigma-Pi-Netz (Identifikationsnetz) abgebildet, indem Ausgangsspeicher von im Netz angeordneten Routern zusammen mit nachfolgenden Verbindungsleitungen den Neuronen des neuronalen Netzes zugeordnet werden, wodurch Aktivitätszustände ($x_k^d$) der Neuronen die Anzahl der Dateneinheiten eines Ziels (*d*), die in den entsprechenden Ausgangsspeichern auf ihre Weiterleitung warten, entsprechen, und Kopplungsgewichte ($w_{ik}^d$) der Neuronen die Anteile der ankommenden Dateneinheiten mit Ziel (*d*), die zu den möglichen Ausgängen weitergeroutet werden (Routing-Tabelle), wobei das Sigma-Pi-Netz aus einzelnen Schichten aufgebaut ist, in denen Teildatenströme abgebildet werden,
   - die Router-Rechner ermitteln Datendurchsätze ($s_k^d, s_k$), Speicherrestriktionen ($r_k$) und Warteschlangen in den Ausgangsspeichern ($x_k^d$, $x_k$) sowie zeitliche Veränderungen ($x'_k, s'_k, r'_k$) davon und übermitteln diese Größen in zeitlichen Abständen ($\tau_{Status}$) an direkt verbundene Nachbar-Router-Rechner,
   - die Router-Rechner berechnen zum zielfunktion-abhängigen Routing ein Fehlerpropagierungsnetz auf der Basis einer dem Sigma-Pi-Netz angepassten Version des Lernverfahrens "Rekurrentes Backpropagation", wobei jeder Rechner nur den Teil der Gesamtberechnung ausführt, der seine lokalen Statusgrößen betrifft, dabei

     - berechnet jeder Router in Zeitabständen ($\tau_{Status}$) die für die Berechnungen des Fehlerpropagierungsnetzes notwendigen Gewichte ($v_{ik}^{de}, v_{ki}^{de}$),
     - berechnet jeder Router in weiteren Zeitabständen ($\tau_{Err1}$ und $\tau_{Err2}$) seine Fehlersignale ($y_k^d$) und ($z_k^d$), wonach die neuen Fehlersignale ($y_k^d$) an direkt verbundene Nachbar-Router-Rechner geschickt werden,
     - berechnet jeder Router nach einem zusätzlichen Zeitabstand ($\tau_{Kor}$) Korrekturen seiner Routing-Gewichte ($\Delta w_{ki}^d, \Delta w_{ik}^d$) mit Hilfe der aktuellen Werte der Fehlersignale ($y_k^d$) und normalisiert die neuen Gewichte, wonach die neuen Gewichte an die direkt verbundene Nachbar-Router-Rechner geschickt werden, die diese neuen Gewichte als neue Routing-Tabelle benutzen.

2. Verfahren nach Anspruch 1,
   **dadurch gekennzeichnet,**
   **dass** die Kommunikationsnetze paketvermittelnd ausgebildet sind.

**3.** Verfahren nach einem der Ansprüche 1 oder 2,
**dadurch gekennzeichnet,**
**dass** die vorkommenden Zeitabstände ($\tau_{Status}$,$\tau_{Err1}$,$\tau_{Err2}$,$\tau_{Kor}$)alternativ, etwa in Abhängigkeit von speziellen Ereignissen oder der Last des Kommunikationsnetzes, im Betrieb so nachgeführt werden, dass zum Beispiel der zusätzliche Kommunikationsaufwand minimiert wird.

**4.** Verfahren nach einem der Ansprüche 1 bis 3,
**dadurch gekennzeichnet,**
**dass** durch zusätzliche Gewichtsfaktoren in den verwendeten Zielfunktionen bestimmte Verbindungen oder Routen des Netzes attraktiver sind als andere und daher für die Routenauswahl bevorzugt werden.

**5.** Verfahren nach einem der Ansprüche 1 bis 4,
**dadurch gekennzeichnet,**
**dass** jeder Schicht die Teildatenströme eines jeweils unterschiedlichen Zieles zugeordnet werden.

**6.** Verfahren nach einem der Ansprüche 1 bis 5,
**dadurch gekennzeichnet,**
**dass** zur Einbeziehung von heterogenen Priorisierungsdiensten für verbindungsorientierte Dienste den einzelnen Schichten frei definierbare Teildatenströme (z.B. einer einzelnen Quelle-Ziel-Beziehung) zugeordnet werden, die gesondert behandelt und geroutet werden sollen.

**7.** Verfahren nach einem der Ansprüche 1 bis 6,
**dadurch gekennzeichnet,**
**dass** speziell gekennzeichnete Dateneinlieiten einer Quelle zur Beanspruchung einer besonders priorisierten Route für verbindungsorientierte Dienste auf der kürzesten Route durch das Kommunikationsnetz geleitet werden und für sich und die nachfolgenden Dateneinheiten diesen Weg durch Neubildung einer hochpriorisierten Schicht reservieren.

**8.** Verfahren nach einem der Ansprüche 1 bis 7,
**dadurch gekennzeichnet,**
**dass** eine gewisse Teilmenge der Routen im Kommunikationsnetz fix eingestellt wird, indem Schichten konstruiert werden, deren Gewichte fix sind, also nicht vom Fehlerpropagierungsnetz geändert werden.

**9.** Verfahren nach einem der Ansprüche 1 bis 8,
**dadurch gekennzeichnet,**
**dass** die Router-Rechner die Datendurchsätze ($s_k^d$, $s_k$), Warteschlangen ($x_k^d$, $x_k$), Speicherrestriktionen ($r_k$) und die zeitlichen Veränderungen davon ($x'_k$,$s'_k$,$r'_k$) über zeitliche Mittelwerte ermitteln und den weiteren Berechnungen des Verfahrens zur Verfügung stellen.

**10.** Verfahren nach einem der Ansprüche 1 bis 9,
**dadurch gekennzeichnet,**
**dass** die Router-Rechner die Datendurchsätze ($s_k^d$, $s_k$), Speicherrestriktionen ($r_k$) und die zeitlichen Veränderungen davon ($s'_k$,$r'_k$) über vordefinierte Funktionen ermitteln und den weiteren Berechnungen des Verfahrens zur Verfügung stellen.

**11.** Verfahren nach einem der Ansprüche 1 bis 10,
**dadurch gekennzeichnet,**
**dass** die Router-Rechner bei den Berechnungen des Fehlerpropagierungsnetzes vereinfachend alle Kopplungsgewichte, die verschiedene Schichten betreffen, auf 0 setzen ($v_{ki}^{el}$=0,$e{\neq}l$),also vernachlässigen.

**Figur 1**

Figur 2

Figur 3

**Figur 4 a**

**Figur 4 b**

$x_i/x_{max,i}$

**Figur 5**

$S_i$

$x_i$

**Figur 6**

**Figur 7**